# EUROPEAN PATENT APPLICATION

(11) **EP 3 530 693 A1**
(43) Date of publication of application: **28.08.2019**
(21) Application number: 17861709.8
(22) Date of filing: 16.10.2017
(51) Int. Cl.: C08L 67/02, C08L 45/02, C08L 65/00, C08L 71/02, C09J 11/06, C09J 167/00

(54) **POLYESTER RESIN COMPOSITION**

(30) Priority: 21.10.2016 JP 2016206450
(71) Applicant: Toagosei Co., Ltd., Minato-ku Tokyo 105-8419 (JP)
(72) Inventor: ITOU, Takahiro, Nagoya-shi Aichi 455-0026 (JP); IMAHORI, Makoto, Nagoya-shi Aichi 455-0026 (JP)
(74) Representative: Neuefeind, Regina
(86) International application number: PCT/JP2017/037363
(87) International publication number: WO 2018/074416

(57) **Abstract**

The polyester-based resin composition according to the present invention is, at least, a polyester-based resin composition including: a polyester resin (A); a surfactant (B); and a terpene-based resin (C), in which the polyester resin (A) is obtained by copolymerizing, as a constituent component, a compound that has, as a frame, a polyalkylene glycol having a number of repeating units of from 3 to 50, in which the surfactant (B) is a non-ionic surfactant having a polyalkylene glycol frame, in which a mixing ratio (A)/(C) of the polyester resin (A) to the terpene-based resin (C) is from 80/20 to 99/1 by mass ratio, and in which the polyester-based resin composition has a water contact angle of 30° or less.

## Description

### Technical Field

The present invention relates to a polyester-based adhesive composition having a resin surface which exhibits hydrophilicity without impairing initial adhesiveness, and a polyester-based resin composition used therefor.

### Related Art

Polyester resins are widely used in various fields as coating agents for films, sheets, and the like, as well as hot melt adhesives, because of their excellent mechanical strength, thermal stability, chemical resistance, and the like.

Polyester resins can be provided with various structures and properties by appropriately selecting the combination of the kinds of polycarboxylic acids and glycols, which are constituent components of polyester resins, and a coating film made of polyester resins exhibits excellent adhesion to a substrate and also exhibits excellent adhesiveness relative to another substrate. Taking advantage of these excellent adhesive properties, polyester resins are widely used in various applications, such as adhesives, coating agents, ink binders and paints. In general, a polyester resin is coated on a substrate, such as a film or sheet made of a polyester resin, a polycarbonate resin, or a polyvinyl chloride resin, or a metal foil made of aluminum or copper.

There have also been attempts to use a polyester resin for both adhesive and coating purposes. That is, a method exists of coating a polyester resin on a substrate, affixing another substrate onto a portion of the coated area of the substrate, and using, as a coating film, the remaining portion of the coated area to which the further substrate has not been affixed. This method is advantageous in that, for example, it is not necessary to strictly adjust the size of an adhesive made of a polyester resin and the size of a substrate to be affixed with the adhesive.

### SUMMARY OF INVENTION

### Technical Problem

In general, the surface of a polyester resin exhibits hydrophobicity, and thus, surface modification is often required in order to improve hydrophilicity and antistatic properties of the surface of the resin. Conventionally, a method has been investigated in which a hydrophilic monomer such as a polyalkylene glycol is copolymerized or graft polymerized, in order to impart hydrophilicity to the surface of the resin (Japanese Patent Application Laid-Open (JP-A) No. 2001-200041). However, it is often difficult to control the degree of modification when improvement of only the surface is intended, and there are certain limits to the modification since the entire resin tends to be modified to result in decreases in physical properties, adhesiveness, and hydrolysis resistance of the resin, and the like. As another alternative, many attempts have been made to carry out surface modification of a resin, by addition of a surfactant or the like (see, for example, JP-A No. S59-66449). However, the surfactant may be locally present on the surface of the resin, which causes decrease in adhesiveness when the resin is used as a polyester resin adhesive. Due to this, it is difficult to sufficiently carry out surface modification of the resin.

An object of the present invention is to provide a polyester-based resin composition of which coating film has a hydrophilic surface, and which exhibits a high peel strength to an adherend when used as an adhesive.

### Solution to Problem

The present inventors have found, as a result of intensive studies, that it is possible to solve the above described problems by a polyester-based resin composition including: a specific polyester resin obtained by copolymerizing, as a constituent component, a compound that has a polyalkylene glycol as a frame; a non-ionic surfactant having a polyalkylene glycol frame; and a terpene-based resin, thereby achieving the present invention.

The present invention includes the following aspects.
<1> A polyester-based resin composition, including:
   a polyester resin (A);
   a surfactant (B); and
   a terpene-based resin (C),
   in which the polyester resin (A) is obtained by copolymerizing, as a constituent component, a compound that has, as a frame, a polyalkylene glycol having a number of repeating units of from 3 to 50,
   in which the surfactant (B) is a non-ionic surfactant having a polyalkylene glycol frame,
   in which a mixing ratio (A)/(C) of the polyester resin (A) to the terpene-based resin (C) is from 80/20 to 99/1 by mass ratio, and
   in which the polyester-based resin composition has a water contact angle of 30° or less.
<2> The polyester-based resin composition according to <1>, in which the polyalkylene glycol in the compound that has, as a frame, a polyalkylene glycol having a number of repeating units of from 3 to 50 and that is a constituent component of the polyester resin (A), has a structure represented by Formula (1) or Formula (2) below:

   HO-((CH₂)ₐO)_{b}-H (1)

   HO-(CH₂CH((CH₂)_{c}CH₃)O)_{d}-H (2)

   in which, in Formula (1) and Formula (2), a represents a number from 2 to 4; c represents a number from 0 to 1, and each of b and d represents a number from 3 to 50.
<3> The polyester-based resin composition according to <1> or <2>, in which a content of the polyalkylene glycol derived from the compound that has, as a frame, a polyalkylene glycol having a number of repeating units of from 3 to 50 and that is a constituent component of the polyester resin (A), is from 0.1 to 35% by mass.
<4> The polyester-based resin composition according to any one of <1> to <3>, in which the polyester resin (A) has a number average molecular weight of from 5,000 to 35,000.
<5> The polyester-based resin composition according to any one of <1> to <4>, in which the surfactant (B) has a structure represented by Formula (3) or Formula (4) below:

   RO-((CH₂)ₑO)_{f}-H (3)

   RO-(CH₂CH((CH₂)_{g}CH₃)O)ₕ-H (4)

   in which, in Formula (3) and Formula (4), each R represents an alkyl group, an alkenyl group, a cycloalkyl group, a cycloalkenyl group, a cyclic ether group, or an aryl group; e represents a number from 2 to 4; g represents a number from 0 to 1; and each of f and h represents a number of 2 or more.
<6> The polyester-based resin composition according to any one of <1> to <5>, in which a content of the surfactant (B) is from 0.1 to 20% by mass.
<7> The polyester-based resin composition according to any one of <1> to <6>, in which the terpene-based resin (C) is an aromatic-modified terpene resin, a terpene phenol resin, or a hydrogenated product thereof.
<8> The polyester-based resin composition according to any one of <1> to <7>, in which the terpene-based resin (C) has a softening point of from 80 to 160°C.
<9> An adhesive composition obtained by dissolving, in an organic solvent, the polyester-based resin composition according to any one of <1> to <8>.

### Advantageous Effects of Invention

According to the present invention, a polyester-based resin composition having a hydrophilic resin surface can be obtained. An adhesive composition obtained from the polyester-based resin composition has a hydrophilic resin surface, and can be used as an adhesive which exhibits sufficient adhesion and adhesiveness to a sheet having a substrate made of a resin or a metal, or the like.

### DESCRIPTION OF EMBODIMENTS

The present invention will now be described in detail.

The polyester-based resin composition according to the present invention is at least, a polyester-based resin composition, including:
a polyester resin (A);
a surfactant (B); and
a terpene-based resin (C),
in which the polyester resin (A) is obtained by copolymerizing a compound that has, as a frame, a polyalkylene glycol having a number of repeating units of from 3 to 50,
in which the surfactant (B) is a non-ionic surfactant having a polyalkylene glycol frame,
in which a mixing ratio (A)/(C) of the polyester resin (A) to the terpene-based resin (C) is from 80/20 to 99/1 by mass ratio, and
in which the polyester-based resin composition has a water contact angle of 30° or less.

The polyester resin (A) used in the present invention includes a polycarboxylic acid component and a glycol component. The polyester resin (A) may exhibit crystallinity or non-crystallinity.

It is preferable that the polyalkylene glycol derived from the compound that has, as a frame, a polyalkylene glycol having a number of repeating units of from 3 to 50 is contained in a content of from 0.1 to 35% by mass with respect to 100% by mass of the components constituting the polyester resin (A), since such a content allows a coating film obtained from the polyester-based resin composition to have a favorable surface hydrophilicity, and also allows an adhesive composition obtained from the polyester-based resin composition to have a high adhesive force. The content of the polyalkylene glycol is more preferably from 0.5 to 15% by mass, and still more preferably from 0.5 to 10% by mass. When the content of the polyalkylene glycol derived from the compound having a polyalkylene glycol as a frame is less than 0.1% by mass, it may result in a failure to achieve a water contact angle of 30° or less. When the content of the polyalkylene glycol derived from the compound having a polyalkylene glycol as a frame is more than 35% by mass, the resulting polyester-based resin composition may have inferior physical properties and a reduced adhesive strength to a substrate.

Further, when the number of repeating units in the polyalkylene glycol is from 3 to 50, an adhesive composition obtained from the polyester-based resin composition has a favorable adhesive strength. When the number of repeating units is less than 3, adhesive strength becomes poor, and when the number of repeating units is more than 50, adhesive strength becomes poor.

It is preferable that the polyalkylene glycol in the compound that has, as a frame, a polyalkylene glycol having a number of repeating units of from 3 to 50 and that is a constituent component of the polyester resin (A), has a structure represented by Formula (1) or Formula (2) below:

HO-((CH₂)ₐO)_{b}-H (1)

HO-(CH₂CH((CH₂)_{c}CH₃)O)_{d}-H (2)

in which, in Formula (1) and Formula (2), a represents a number from 2 to 4; c represents a number from 0 to 1, and each of b and d represents a number from 3 to 50.

This structure enables to enhance an effect of improving the surface hydrophilicity of a coating film obtained from the polyester-based resin composition.

Examples of the compound having a polyalkylene glycol as a frame, which can be used in the present invention, include: polyethylene glycol, polytetramethylene glycol, polypropylene glycol, polyhexylene glycol, polynonanediol, poly(3-methyl-1,5-pentane) diol, polyoxyethylene-modified bisphenol A, polyoxypropylene-modified bisphenol A, and polyoxybutylene-modified bisphenol A. Among these, polyethylene glycol is preferable, since the effect of improving the hydrophilicity of the polyester-based resin composition can be enhanced.

The glycol component which can be used as a glycol component constituting the polyester resin (A), other than the compound having a polyalkylene glycol as a frame, is not particularly limited. Examples thereof include ethylene glycol, diethylene glycol, triethylene glycol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,4-cyclohexanedimethanol, 1,3-cyclohexanedimethanol, tricyclodecanedimethanol, spiroglycol, dimer diol, neopentyl glycol, 2,2-butylethylpropanediol, 1,2-propanediol, 2-methyl-1,3-propanediol, and 3-methyl-1,5-pentanediol. Among these, it is preferable that the polyester resin (A) contains 1,6-hexanediol, neopentyl glycol, 2,2-butylethylpropanediol, 1,2-propanediol or 2-methyl-1,3-propanediol, from the viewpoint of improving solubility to solvent.

As a polycarboxylic acid component constituting the polyester resin (A), it is preferable that the polyester resin (A) contains 60% by mole or more of an aromatic dicarboxylic acid, but the polycarboxylic acid component is not particularly limited thereto. The aromatic dicarboxylic acid is preferably terephthalic acid, from the viewpoint of initial adhesiveness relative to a substrate and heat resistance. From the viewpoint of solubility to solvent, the aromatic dicarboxylic acid is preferably isophthalic acid.

Examples of the polycarboxylic acid component which can be used as the polycarboxylic acid component constituting the polyester resin (A), other than terephthalic acid and isophthalic acid, include malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, heptadecanedioic acid, octadecanedioic acid, nonadecanedioic acid, eicosanedioic acid, docosanedioic acid, phthalic acid, naphthalenedicarboxylic acid, 4,4'-dicarboxybiphenyl, 5-sodium sulfoisophthalic acid, 5-hydroxyisophthalic acid, fumaric acid, maleic acid, itaconic acid, mesaconic acid, citraconic acid, 1,3,4-benzenetricarboxylic acid, 1,2,4,5-benzenetetracarboxylic acid, pyromellitic acid, trimellitic acid, oxalic acid, 1,4-cyclohexanedicarboxylic acid, 1,3-cyclohexane dicarboxylic acid, 1,2-cyclohexanedicarboxylic acid, 2,5-norbornenedicarboxylic acid, dimer acid, a hydrogenated dimer acid, and an anhydride thereof. Among these, it is preferable that the polyester resin (A) contains sebacic acid from the viewpoint of adhesiveness.

If necessary, the polyester resin (A) used in the present invention may contain, as a monomer constituting a polyester polymer which is a main chain, a monomer component (other monomer component) other than the polycarboxylic acid component and the glycol component, as long as the effect of the present invention is not impaired. Further, in the polyester polymer, it is preferable that the other monomer component is copolymerized at a ratio of less than 50% by mole with respect to the amount of the entire monomer components contained in the polyester polymer.

Examples of the other monomer component include: hydroxycarboxylic acids such as tetrahydrophthalic acid, lactic acid, oxirane, glycolic acid, 2-hydroxybutyric acid, 3-hydroxybutyric acid, 4-hydroxybutyric acid, 2-hydroxyisobutyric acid, 2-hydroxy-2-methylbutyric acid, 2-hydroxyvaleric acid, 3-hydroxyvaleric acid, 4-hydroxyvaleric acid, 5-hydroxyvaleric acid, 6-hydroxycaproic acid, 10-hydroxystearic acid, and 4-(β-hydroxy)ethoxybenzoic acid; and aliphatic lactones such as β-propiolactone, β-butyrolactone, γ-butyrolactone, δ-valerolactone, and ε-caprolactone.

Further, a monocarboxylic acid, a monoalcohol or the like may also be used as the other monomer component. Examples of the monocarboxylic acid include lauric acid, myristic acid, palmitic acid, stearic acid, oleic acid, linoleic acid, linolenic acid, benzoic acid, p-tert-butylbenzoic acid, cyclohexanoic acid and 4-hydroxyphenyl stearic acid. Examples of the monoalcohol include octyl alcohol, decyl alcohol, lauryl alcohol, myristyl alcohol, cetyl alcohol, stearyl alcohol, and 2-phenoxyethanol.

Next, a method of producing the polyester resin (A) according to the present invention will be described.

The polyester resin (A) can be obtained by appropriately selecting the combination of monomers such as a polycarboxylic acid(s) and a glycol(s), and then polymerizing these monomers by a known polymerization method. More specifically, the polyester resin (A) can be produced by introducing raw material monomers into a reactor, and then carrying out an esterification reaction, followed by carrying out a polycondensation reaction by a known method until a desired molecular weight is achieved. The esterification reaction is carried out, for example, at a temperature of 180°C or higher for four hours or longer.

The polycondensation reaction is preferably carried out, using a polymerization catalyst, under a reduced pressure of 130 Pa or less, and at a temperature of from 220 to 280°C. Examples of the polymerization catalyst include: titanium compounds such as tetrabutyl titanate; metal acetates such as zinc acetate, magnesium acetate, and zinc acetate; antimony trioxide; and organic tin compounds such as hydroxybutyltin oxide, and tin octylate. Further, the polymerization catalyst is preferably used in an amount of from 0.1 to 20 × 10⁻⁴ moles with respect to 1 mole of the acid component, from the viewpoint of preventing decrease in reaction rate and deterioration in color of the resulting polyester-based resin composition.

The polyester resin (A) used in the present invention preferably has a number average molecular weight of from 5,000 to 35,000, since it is possible to improve the solubility of the polyester-based resin composition to an organic solvent, and to increase the adhesive force of the resulting adhesive composition. The polyester resin (A) more preferably has a number average molecular weight of from 8,000 to 30,000, and still more preferably has a number average molecular weight of from 10,000 to 25,000. When the polyester resin (A) has a number average molecular weight of 5,000 or more, excellent initial adhesiveness can be obtained. Further, when the polyester resin (A) has a number average molecular weight of 35,000 or less, increases in melt viscosity and solution viscosity of the resulting polyester-based resin composition can be suppressed, thereby achieving excellent handleability.

In the present invention, the molecular weight of the polyester resin (A) can be controlled by, for example: a method of terminating polymerization when a polyester melt during polycondensation has reached a predetermined melt viscosity; a method of producing a polyester having a high molecular weight, and then adding a depolymerizing agent to the resultant; and a method of adding a monofunctional carboxylic acid and/or a monofunctional alcohol in advance. In the present invention, the molecular weight may be controlled by any of the above described methods.

The surfactant (B) used in the present invention is a non-ionic surfactant having a polyalkylene glycol frame.

The surfactant (B) preferably has a structure represented by Formula (3) or Formula (4) below:

RO-((CH₂)ₑO)_{f}-H (3)

RO-(CH₂CH((CH₂)_{g}CH₃)O)ₕ-H (4)

in which, in Formula (3) and Formula (4), each R represents an alkyl group, an alkenyl group, a cycloalkyl group, a cycloalkenyl group, a cyclic ether group, or an aryl group; e represents a number from 2 to 4; g represents a number from 0 to 1; and each of f and h represents a number of 2 or more.

This structure enables to enhance the effect of improving the surface hydrophilicity of a coating film obtained from the polyester-based resin composition.

The surfactant (B) preferably has an HLB (Hydrophilic-Lipophilic Balance) of from 8 to 20, since it allows the polyester-based resin composition to have a favorable hydrophilicity, and allows an adhesive composition obtained from the polyester-based resin composition to have a favorable adhesive force. When the surfactant (B) has an HLB of 8 or more, the surface hydrophilicity of a coating film obtained from the polyester-based resin composition is improved, and when the surfactant (B) has an HLB of 20 or less, the resulting adhesive composition has excellent adhesive force.

Examples of the surfactant (B) include: polyoxyethylene higher alcohol ethers such as polyoxyethylene lauryl alcohol, polyoxyethylene lauryl ether, and polyoxyethylene oleyl ether; polyoxyethylene alkylaryl ethers such as polyoxyethylene octylphenol, and polyoxyethylene nonylphenol; polyoxyethylene acyl esters such as polyoxyethylene glycol monostearate; a polypropylene glycol ethylene oxide adduct; polyoxyethylene sorbitan fatty acid esters such as polyoxyethylene sorbitan monolaurate, and polyoxyethylene sorbitan monostearate; phosphate esters such as alkyl phosphate esters and polyoxyethylene alkyl ether phosphate esters; sugar esters; and cellulose ethers.

A content of the surfactant (B) used in the present invention is preferably from 0.1 to 20% by mass with respect to the total amount of the polyester-based resin composition, since it allows a coating film obtained from the polyester-based resin composition to have an improved surface hydrophilicity and an enhanced adhesion to a substrate. The content of the surfactant (B) is more preferably from 0.3 to 15% by mass, and still more preferably from 0.5 to 8.0% by mass. When the content of the surfactant (B) is 0.1% by mass or more, the hydrophilicity on the surface of the polyester-based resin composition is improved, and when the content is 20% by mass or less, occurrence of bleeding on the surface of the resin is suppressed and the polyester-based resin composition has excellent adhesion.

The terpene-based resin (C) used in the present invention is a resin obtained by polymerizing a terpene monomer.

Examples of the terpene-based resin (C) include: a polyterpene resin prepared by homopolymerization of α-pinene, β-pinene, dipentene, or the like, which is a terpene monomer obtained by purification; an aromatic-modified terpene resin prepared by copolymerization of a terpene monomer and an aromatic monomer; and a terpene phenol resin prepared by copolymerization of a terpene monomer and phenols. Examples of the aromatic monomer include styrene, and α-methylstyrene. Examples of the phenols include phenol, and cresol. Further, the terpene-based resin (C) may be a hydrogenated product obtained by subjecting the resin above to a hydrogenation treatment. These terpene-based resins are commercially available as various grades of product under, for example, the brand names of "YS RESIN", "CLEARON", and "YS POLYSTER" manufactured by Yasuhara Chemical Co., Ltd., and thus can be easily obtained.

Among the terpene-based resin (C) described above, an aromatic-modified terpene resin, a terpene phenol resin, and a hydrogenated product thereof are more preferable; and an aromatic-modified terpene resin and a hydrogenated product thereof are still more preferable, since an enhanced effect of improving the adhesiveness can be obtained.

The terpene-based resin (C) preferably has a softening point as measured by a ring and ball method of from 80 to 160°C, more preferably from 90 to 145°C, and still more preferably from 100 to 130°C. When the terpene-based resin (C) has a softening point of 80°C or higher, the polyester-based resin composition has excellent resistance to moist heat, and when the terpene-based resin (C) has a softening point of 160°C or lower, the resulting adhesive composition has excellent initial adhesiveness.

In the present invention, it is necessary that a mixing ratio of the polyester resin (A) to the terpene-based resin (C) is from 80/20 to 99/1 (% by mass). The mixing ratio is preferably from 82/18 to 98/2 (% by mass), and more preferably from 85/15 to 95/5 (% by mass). When the mixing ratio of the polyester resin (A) is 80% by mass or more, a water contact angle of 30° or less is achieved, and when the mixing ratio is 99% by mass or less, excellent initial adhesiveness can be obtained.

The polyester-based resin composition according to the present invention may exhibit crystallinity or non-crystallinity. The term "crystallinity" is used for a composition that has a crystal melting point (hereinafter, referred to as "melting point") when the temperature is elevated, and has a fusion heat amount of 0.1 J/g or more, as measured using a DSC (differential scanning calorimeter) in accordance with JIS K-7121. The term "non-crystallinity" is used for a composition that does not have a crystal melting point, and has a fusion heat amount of less than 0.1 J/g, as measured in the same manner.

Examples of the method of producing the polyester-based resin composition include: [1] a method of dissolving, in an organic solvent, predetermined amounts of the above described (A), (B), and (C); [2] a method of mixing an organic solvent solution obtained by dissolving (A), an organic solvent solution obtained by dissolving (B), and an organic solvent solution obtained by dissolving (C), which have been prepared in advance; and [3] a method of melt-kneading the (A), (B), and (C), and then dissolving the resulting resin composition in an organic solvent. Among these, the method [1] is preferable. The organic solvent is not particularly limited, and examples thereof include: aromatic-based solvents such as toluene, xylene, solvent naphtha, and Solvesso (registered trademark of Exxon Mobil Corporation); ketone-based solvents such as methyl ethyl ketone, methyl isobutyl ketone, and cyclohexanone; alcohol-based solvents such as methanol, ethanol, isopropyl alcohol, and isobutyl alcohol; ester-based solvents such as ethyl acetate, and normal butyl acetate; and acetate-based solvents such as cellosolve acetate, and methoxy acetate. These solvents may be used singly, or in combination of two or more kinds thereof.

The polyester-based resin composition according to the present invention has a water contact angle of 30° or less. Further, a lower limit value of the water contact angle is 0°. The water contact angle is measured by a method to be described later. A water contact angle of more than 30° is not preferable, since it leads to an insufficient wettability to water or an aqueous liquid, as a result of which the wettability to water or an aqueous liquid on the surface of a coating film obtained from the polyester-based resin composition becomes insufficient.

As described above, an adhesive composition can be obtained by mixing and dissolving the polyester resin (A), the surfactant (B), and the terpene-based resin (C) in an organic solvent. It is preferable that the adhesive composition has a solid content concentration of from 5 to 60% by mass, since it makes the composition easy to handle, and allows for forming a coating film having an appropriate film thickness. The solid content concentration is more preferably from 10 to 50% by mass, and still more preferably from 20 to 40% by mass. When the solid content concentration is 5% by mass or more, it is possible to easily coat a sufficient amount of the adhesive composition, in the case of coating the composition on a substrate as described later. Further, when the solid content concentration is 60% by mass or less, the adhesive composition has an appropriate solution viscosity, and excellent thickness accuracy can be obtained in the case of coating the adhesive composition on a substrate.

If necessary, the adhesive composition according to the present invention may contain an antioxidant, a hydrolysis inhibitor, a pigment, or the like. Examples of the antioxidant are not particularly limited, and include a phenol-based antioxidant, a phosphorus-based antioxidant, and a sulfur-based antioxidant. Examples of the hydrolysis inhibitor include carbodiimide derived from isocyanate. Examples of the pigment include titanium dioxide, and zinc oxide.

By coating the adhesive composition according to the present invention, for example, on any of various types of substrates, followed by drying to remove the organic solvent if necessary, it is possible to produce a substrate with an adhesive in which a coating film is formed on the substrate, particularly, a sheet or a film with an adhesive.

The substrate to be coated with the adhesive composition according to the present invention is not particularly limited, and the substrate is selected from, for example: a polyester substrate selected from polyethylene terephthalate (PET), polyethylene naphthalate (PEN), polybutylene terephthalate (PBT), or polycyclohexanedimethanol terephthalate (PCT); a polycarbonate substrate; a fluorine substrate selected from polyvinyl fluoride (PVF), polyvinylidene fluoride (PVDF), polychlorotrifluoroethylene (PCTFE), polyethylenetetrafluoroethylene (ETFE), polytetrafluoroethylene (PTFE), a tetrafluoroethyleneperfluoroalkyl vinyl ether copolymer (PFA), or a tetrafluoroethylene-hexafluoropropylene copolymer (FEP); an acrylic substrate; a polyolefin substrate such as a cyclic olefin (COC), polyethylene (high density polyethylene, low density polyethylene, or linear low density polyethylene), polypropylene, or polybutene; a polyvinyl chloride substrate; a polystyrene substrate; a polyvinylidene chloride substrate; an ethylene-vinyl acetate copolymer substrate; a polyvinyl alcohol substrate; a polyvinyl acetate substrate; an acetal substrate; a polyamide substrate; or a polyarylate substrate. These substrates may be the same as or different from each other. Further, a plurality of substrates and adhesive layers may be present, and the substrates and adhesive layers can be formed into a laminated body.

The method of coating the adhesive composition according to the present invention on a substrate is not particularly limited, and it is possible to use a known method such as a reverse roll coating method, a gravure coating method, a die coating method, a comma coating method, or a spray coating method.

In the case of coating the adhesive composition according to the present invention on a substrate, the thickness of the coating film may vary depending on application. The coating film preferably has a thickness of from 3 to 1,000 µm, more preferably from 5 to 500 µm, and still more preferably from 5 to 300 µm. A coating film thickness of 3 µm or more provides excellent adhesiveness. A coating film thickness of 1,000 µm or less is economical, and provides excellent adhesiveness.

The adhesive composition according to the present invention has properties of a polyester resin-based adhesive, and has excellent adhesiveness relative to a metal or resin material, as well as excellent mechanical properties. Further, the adhesive composition has a water contact angle of resin surface of 30° or less, and the portion of the resin surface which is exposed without being adhered maintains a favorable wettability to water. Such properties allow the adhesive composition to be preferably used as a hot melt adhesive having favorable ink transferability, for example, in a case of printing on a portion of an adhesive layer.

### EXAMPLES

The present invention will now be specifically described with reference to Examples and Comparative Examples. However, the present invention is not limited to these Examples.

### 1. Evaluation Methods

### 1-1. Contact Angle

The water contact angle was measured at 25°C, in accordance with a sessile drop method defined in JIS R 3257 (enacted on 1999). Type CA-X contact angle meter, manufactured by Kyowa Interface Science Co., Ltd., was used as a contact angle measuring apparatus.

### 1-2. Number Average Molecular Weight

Apparatus: HLC-8220 GPC (manufactured by Tosoh Corporation)
Columns: Two TSKgel GMHXL columns (manufactured by Tosoh Corporation)
Column temperature: 40°C
Eluent: Tetrahydrofuran, 1.00 mL/min
Detector: Differential refractometer (RI)

The molecular weight as measured by GPC is converted to a molecular weight in terms of polystyrene.

### 1-3. Monomer Composition of Polyester Resin

An NMR measuring apparatus was used to measure ¹H-NMR, and the composition of the resin was determined from peak intensities of the respective copolymerization components. In the measurement, deuterated chloroform was used as a solvent for measurement.

### 1-4. Melting Point, Glass Transition Point

A differential scanning calorimeter (DSC) was used for the measurement. The measurement was carried out at a temperature rise rate of 10°C/min.

### 1-5. Stability Test of Adhesive Composition

A quantity of 70 g of the adhesive composition was added to a 100 mL glass bottle, and the bottle was sealed with a plug. After leaving the bottle to stand at 5°C for 7 days, the adhesive composition was visually evaluated according to the following evaluation criteria.
A (Excellent): The adhesive composition remained in the form of a liquid.
B (Favorable): The adhesive composition solidified in an agar-like state, but returned to a liquid state at 25°C.
C (Inadequate): The adhesive composition solidified in an agar-like state, and did not return to a liquid state at 25°C.

### 1-6. Peel Strength

### (1) Preparation of Test Piece

The adhesive composition was coated, with a bar coater, on an aluminum foil (100 mm × 200 mm) having a thickness of 40 µm. Thereafter, the resultant was dried at 100°C for 3 minutes to remove the organic solvent contained in the adhesive composition, to form an adhesive layer having a film thickness of 30 µm. Subsequently, a PET film having a thickness of 100 µm was affixed on the surface of the adhesive layer, and a pressure was applied from the surface of the aluminum foil, using a thermal gradient tester, to press the film to the adhesive layer, thereby obtaining a test piece. The adhesion was carried out under the conditions of a temperature of 100°C, a pressure of 0.3 MPa, and a press time of 2 seconds.

### (2) Measurement of T-peel Strength

The test piece was cut in a width of 10 mm, and the T-peel strength (N/10 mm) between the aluminum foil and the PET film was measured. The measurement was carried out under the conditions of a temperature of 25°C, and a tensile speed of 100 mm /min.

### 2. Raw Materials

### (1) Surfactants

(S-1): Polyoxyethylene lauryl ether ("EMULGEN 103", manufactured by Kao Corporation; HLB: 8.1)
(S-2): Polyoxyethylene sorbitan monolaurate ("LEODOL TW-L106", manufactured by Kao Corporation; HLB: 13.3)
(S-3): Coconut amine acetate ("ACETAMIN 24", manufactured by Kao Corporation)
(S-4): Sodium dodecylbenzenesulfonate ("NEOPELEX G-65", manufactured by Kao Corporation)

### (2) Terpene-based Resins

(T-1): A terpene phenol resin ("YS POLYSTER K140", manufactured by Yasuhara Chemical Co., Ltd.; softening point: 140°C)
(T-2): A terpene phenol resin ("YS POLYSTER K125", manufactured by Yasuhara Chemical Co., Ltd.; softening point: 125°C)
(T-3): A terpene phenol resin ("YS POLYSTER T160", manufactured by Yasuhara Chemical Co., Ltd.; softening point: 160°C)
(T-4): A terpene phenol resin ("YS POLYSTER T80", manufactured by Yasuhara Chemical Co., Ltd.; softening point: 80°C)
(T-5): A terpene phenol resin ("YS POLYSTER G150", manufactured by Yasuhara Chemical Co., Ltd.; softening point: 150°C)
(T-6): A terpene resin ("YS RESIN PX 1000", manufactured by Yasuhara Chemical Co., Ltd.; softening point: 100°C)
(T-7): An aromatic-modified terpene resin ("YS RESIN TO125", manufactured by Yasuhara Chemical Co., Ltd.; softening point: 125°C)
(T-8): A hydrogenated product of an aromatic-modified terpene resin ("CLEARON P115", manufactured by Yasuhara Chemical Co., Ltd.; softening point: 115°C)

### (Synthesis of Polyester Resin)

### Synthesis Example 1

As shown in Table 1, 159 g of terephthalic acid, 52.9 g of isophthalic acid, 65.9 g of sebacic acid, 91.1 g of ethylene glycol, 92.5 g of 1,6-hexanediol, 39.1 g of PEG 200, and 0.3 g of tetrabutyl titanate as a polymerization catalyst were added into a reactor, and the atmosphere in the reactor was replaced with nitrogen. Then, the reactor was heated at 230°C while stirring at 300 rpm, thereby allowing these raw materials to melt. After the temperature in the reactor reached 230°C, an esterification reaction was allowed to proceed for 3 hours. After a lapse of 3 hours, the temperature in the reactor was adjusted to 240°C, and the pressure in the reactor was reduced. After the pressure in the reactor reached a high vacuum (namely, a pressure of from 0.1 to 10⁻⁵ Pa), a polymerization reaction was allowed to proceed for another 5 hours to obtain a polyester resin (P-1). The resulting polyester resin (P-1) had a number average molecular weight of 19,000, a melting point of 68°C, and a glass transition point of -3°C. The results are shown in Table 2. The content of the polyalkylene glycol was determined by NMR measurement of the resulting polyester resin.

**[Table 1]**

| Raw Material | | Synthesis Example 1 | Synthesis Example 2 | Synthesis Example 3 | Synthesis Example 4 | Synthesis Example 5 | Synthesis Example 6 | Synthesis Example 7 | Synthesis Example 8 | Synthesis Example 9 | Synthesis Example 10 |
|---|---|---|---|---|---|---|---|---|---|---|---|
| Composition of Added Monomers (g) | EG | 91.1 | 94.0 | 93.6 | 87.3 | 84.3 | 81.5 | 86.9 | 86.4 | 85.8 | 94.1 |
| | HG | 92.5 | 119 | 115 | 59.1 | 32.1 | 6.9 | 105 | 107 | 107 | 119 |
| | PEG 200 | 39.1 | 0.3 | 6.7 | 87.6 | 127 | 163 | | | | |
| | PEG 1000 | | | | | | | 43.5 | | | |
| | PEG 2000 | | | | | | | | 43.3 | | |
| | PEG 3000 | | | | | | | | | 46.1 | |
| | TPA | 159 | 164 | 163 | 152 | 147 | 142 | 151 | 150 | 149 | 164 |
| | IPA | 52.9 | 54.6 | 54.3 | 50.7 | 48.9 | 47.3 | 50.4 | 50.1 | 49.8 | 54.6 |
| | SEA | 65.9 | 68.1 | 67.7 | 63.2 | 61.1 | 59.0 | 62.9 | 62.6 | 62.1 | 68.1 |
| | Tetrabutyl titanate | 0.3 | 0.3 | 0.3 | 0.3 | 0.3 | 0.3 | 0.3 | 0.3 | 0.3 | 0.3 |

**[Table 2]**

| Resin | | Synthesis Example 1 | Synthesis Example 2 | Synthesis Example 3 | Synthesis Example 4 | Synthesis Example 5 | Synthesis Example 6 | Synthesis Example 7 | Synthesis Example 8 | Synthesis Example 9 | Synthesis Example 10 |
|---|---|---|---|---|---|---|---|---|---|---|---|
| | | P-1 | P-2 | P-3 | P-4 | P-5 | P-6 | P-7 | P-8 | P-9 | P-10 |
| Composition (mol%) | EG | 20 | 20 | 20 | 20 | 20 | 20 | 20 | 20 | 20 | 20 |
| | HG | 24 | 30 | 29 | 16 | 9 | 2 | 29 | 29 | 30 | 30 |
| | PEG 200 | 6.0 | 0.05 | 1.0 | 14 | 21 | 28 | | | | |
| | PEG 1000 | | | | | | | 1.4 | | | |
| | PEG 2000 | | | | | | | | 0.7 | | |
| | PEG 3000 | | | | | | | | | 0.5 | |
| | TPA | 30 | 30 | 30 | 30 | 30 | 30 | 30 | 30 | 30 | 30 |
| | IPA | 10 | 10 | 10 | 10 | 10 | 10 | 10 | 10 | 10 | 10 |
| | SEA | 10 | 10 | 10 | 10 | 10 | 10 | 10 | 10 | 10 | 10 |
| Polyalkylene Glycol Content (% by mass) | | 9.8 | 0.1 | 1.7 | 21 | 31 | 39 | 11 | 11 | 11 | |
| Number Average Molecular Weight | | 19000 | 20000 | 19500 | 19000 | 20100 | 21000 | 20000 | 19000 | 19000 | 20000 |
| Melting Point (°C) | | 68.0 | 70.0 | 68.0 | 72 | 60 | 58 | 68 | 68 | 68 | 70.0 |
| Glass Transition Point (°C) | | -3.0 | -1.0 | -2.0 | -20 | -22 | -25 | -8 | -8 | -8 | 1.0 |

### Synthesis Examples 2 to 10

Polycondensation reactions of polyester resins were carried out in the same manner as Synthesis Example 1, except that the monomers used and the composition of added monomers were changed as shown in Table 1. The respective physical property values of the resulting polyester resins are shown in Table 2.

The abbreviations used in Table 1, and in Table 2 to be described later, indicate those below.
TPA: terephthalic acid
IPA: isophthalic acid
SEA: sebacic acid
EG: ethylene glycol
HG: 1,6-hexanediol
PEG 200: polyethylene glycol (molecular weight: 200, number of repeating units: about 4.6)
PEG 1000: polyethylene glycol (molecular weight: 1000, number of repeating units: about 23)
PEG 2000: polyethylene glycol (molecular weight: 2000, number of repeating units: about 45)
PEG 3000: polyethylene glycol (molecular weight: 3000, number of repeating units: about 68)

The final composition and characteristic values of each of the resulting polyester resins (P-1) to (P-10) are shown in Table 2.

### Example 1

A quantity of 100 g of the polyester resin (P-1) synthesized in Synthesis Example 1, 0.1 g of the surfactant (S-1), 10 g of the terpene-based resin (T-1) were dissolved in 125 g of toluene and 125 g of methyl ethyl ketone, to obtain an adhesive composition having a solid content concentration of 31% by mass. Various properties of the resulting adhesive composition were evaluated. The results are shown in Table 3.

### Examples 2 to 22 and Comparative Examples 1 to 6

Each of the adhesive compositions was obtained in the same manner as Example 1, except that the polyester resin, the surfactant, the terpene-based resin and the addition amount were changed as shown in Tables 3 and 4, and various properties thereof were evaluated. The results are shown in Tables 3, 4 and 5.

**[Table 3]**

| Blend Composition (g) | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Polyester Resin | Synthesis Example 1 (P-1) | 100 | 100 | 100 | 100 | 100 | | | | | | | |
| | Synthesis Example 2 (P-2) | | | | | | 100 | | | | | | |
| | Synthesis Example 3 (P-3) | | | | | | | 100 | | | | | |
| | Synthesis Example 4 (P-4) | | | | | | | | 100 | | | | |
| | Synthesis Example 5 (P-5) | | | | | | | | | 100 | | | |
| | Synthesis Example 6 (P-6) | | | | | | | | | | 100 | | |
| | Synthesis Example 7 (P-7) | | | | | | | | | | | 100 | |
| | Synthesis Example 8 (P-8) | | | | | | | | | | | | 100 |
| Surfactant | (S-1) | 0.1 | 5.0 | 10 | 15 | | 5.0 | 5.0 | 5.0 | 5.0 | 5.0 | 5.0 | 5.0 |
| | (S-2) | | | | | 5.0 | | | | | | | |
| Terpene-based Resin | (T-1) | 10 | 10 | 10 | 10 | 10 | 10 | 10 | 10 | 10 | 10 | 10 | 10 |
| | (T-2) | | | | | | | | | | | | |
| | (T-3) | | | | | | | | | | | | |
| | (T-4) | | | | | | | | | | | | |
| | (T-5) | | | | | | | | | | | | |
| | (T-6) | | | | | | | | | | | | |
| | (T-7) | | | | | | | | | | | | |
| | (T-8) | | | | | | | | | | | | |
| Organic Solvent | Toluene | 125 | 125 | 125 | 125 | 125 | 125 | 125 | 125 | 125 | 125 | 125 | 125 |
| | Methyl Ethyl Ketone | 125 | 125 | 125 | 125 | 125 | 125 | 125 | 125 | 125 | 125 | 125 | 125 |
| Appearance of Solution | | A | A | A | A | A | A | A | A | A | A | A | A |
| Contact Angle (°) | | 20 | 8 | 5 | 5 | 10 | 9 | 11 | 11 | 9 | 7 | 11 | 11 |
| Peel Strength (N/10 mm) | | 30 | 28 | 24 | 16 | 28 | 26 | 25 | 29 | 27 | 16 | 29 | 27 |

**[Table 4]**

| Blend Composition (g) | | Example 13 | Example 14 | Example 15 | Example 16 | Example 17 | Example 18 | Example 19 | Example 20 | Example 21 | Example 22 |
|---|---|---|---|---|---|---|---|---|---|---|---|
| Polyester Resin | Synthesis Example 1 (P-1) | 100 | 100 | 100 | 100 | 100 | 100 | 100 | 100 | 100 | 100 |
| | Synthesis Example 2 (P-2) | | | | | | | | | | |
| | Synthesis Example 3 (P-3) | | | | | | | | | | |
| | Synthesis Example 4 (P-4) | | | | | | | | | | |
| | Synthesis Example 5 (P-5) | | | | | | | | | | |
| | Synthesis Example 6 (P-6) | | | | | | | | | | |
| | Synthesis Example 7 (P-7) | | | | | | | | | | |
| | Synthesis Example 8 (P-8) | | | | | | | | | | |
| Surfactant | (S-1) | 5.0 | 5.0 | 5.0 | 5.0 | 5.0 | 5.0 | 5.0 | 5.0 | 5.0 | 5.0 |
| | (S-2) | | | | | | | | | | |
| Terpene-based Resin | (T-1) | 5 | 15 | 25 | | | | | | | |
| | (T-2) | | | | 10 | | | | | | |
| | (T-3) | | | | | 10 | | | | | |
| | (T-4) | | | | | | 10 | | | | |
| | (T-5) | | | | | | | 10 | | | |
| | (T-6) | | | | | | | | 10 | | |
| | (T-7) | | | | | | | | | 10 | |
| | (T-8) | | | | | | | | | | 10 |
| Organic Solvent | Toluene | 125 | 125 | 125 | 125 | 125 | 125 | 125 | 125 | 125 | 125 |
| | Methyl Ethyl Ketone | 125 | 125 | 125 | 125 | 125 | 125 | 125 | 125 | 125 | 125 |
| Appearance of Solution | | A | A | A | A | A | A | A | A | A | A |
| Contact Angle (°) | | 7 | 20 | 30 | 7 | 6 | 10 | 8 | 12 | 11 | 7 |
| Peel Strength (N/10 mm) | | 24 | 34 | 32 | 26 | 20 | 28 | 28 | 23 | 32 | 28 |

**[Table 5]**

| Blend Composition (g) | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Polyester Resin | Synthesis Example 1 (P-1) | 100 | 100 | 100 | | | 100 | 100 |
| | Synthesis Example 9 (P-9) | | | | 100 | | | |
| | Synthesis Example 10 (P-10) | | | | | 100 | | |
| Surfactant | (S-1) | | | | 5.0 | 5.0 | 15 | |
| | (S-3) | | 5.0 | | | | | |
| | (S-4) | | | 5.0 | | | | |
| Terpene-based Resin | (T1) | | 10 | 10 | 10 | 10 | 40 | 10 |
| Organic Solvent | Toluene | 125 | 125 | 125 | 125 | 125 | 125 | 125 |
| | Methyl Ethyl Ketone | 125 | 125 | 125 | 125 | 125 | 125 | 125 |
| Appearance of Solution | | A | A | A | A | A | A | A |
| Contact Angle (°) | | 65 | 78 | 4 | 5 | 5 | 67 | 75 |
| Peel Strength (N/10 mm) | | 24 | 32 | 5 | 6 | 4 | 34 | 34 |

According to the results shown in Tables 3 and 4, the adhesive composition of each of Examples 1 to 22 had a water contact angle of 30° or less, and a high peel strength of 10 N/10 mm or more. It was found, from these results, that it was possible to obtain a polyester resin-based adhesive composition having both a favorable wettability to water and a favorable peel strength, and that the adhesive composition had a favorable solution stability.

The adhesive composition of Comparative Example 1 had a peel strength of 24 N/10 mm, which was favorable. However, the water contact angle of the composition was 65°, since the surfactant and the terpene-based resin as recited in claim 1 were not contained therein.

The adhesive composition of Comparative Example 2 had a peel strength of 32 N/10 mm, which was favorable. However, the water contact angle of the composition was 78°, since the surfactant contained therein was not a non-ionic surfactant having a polyalkylene glycol frame.

The adhesive composition of Comparative Example 3 had a water contact angle of 4°. However, the peel strength of the composition was 5 N/10 mm, since the surfactant contained therein was not a non-ionic surfactant having a polyalkylene glycol frame.

The adhesive composition of Comparative Example 4 had a water contact angle 5°. However, the peel strength of the composition was 6 N/10 mm, since the polyalkylene glycol copolymerized with the polyester resin had a number of repeating units above the range as recited in claim 1.

The adhesive composition of Comparative Example 5 had a water contact angle of 5°. However, the peel strength of the composition was 4 N/10 mm, since no polyalkylene glycol was copolymerized with the polyester resin.

The adhesive composition of Comparative Example 6 had a peel strength of 34 N/10 mm. However, the water contact angle of the composition was 67°, since the content of the terpene-based resin was too high.

The adhesive composition of Comparative Example 7 had a peel strength of 34N/10 mm, which was favorable. However, the water contact angle of the composition was 75°, since the surfactant as recited in claim 1 was not contained therein.

### Industrial Applicability

The adhesive composition according to the present invention has properties of a polyester resin-based adhesive, and has excellent adhesiveness relative to a metal or resin material, as well as excellent mechanical properties. Further, the adhesive composition has a water contact angle of resin surface of 30° or less, and the portion of the resin surface which is exposed without being adhered maintains a favorable wettability to water. Such properties allow the adhesive composition to be preferably used as a hot melt adhesive having favorable ink transferability, for example, in a case of printing on a portion of an adhesive layer

## Claims

1. A polyester-based resin composition, comprising:
a polyester resin (A);
a surfactant (B); and
a terpene-based resin (C),
wherein the polyester resin (A) is obtained by copolymerizing, as a constituent component, a compound that has, as a frame, a polyalkylene glycol having a number of repeating units of from 3 to 50,
wherein the surfactant (B) is a non-ionic surfactant having a polyalkylene glycol frame,
wherein a mixing ratio (A)/(C) of the polyester resin (A) to the terpene-based resin (C) is from 80/20 to 99/1 by mass ratio, and
wherein the polyester-based resin composition has a water contact angle of 30° or less.

2. The polyester-based resin composition according to claim 1, wherein the polyalkylene glycol in the compound that has, as a frame, a polyalkylene glycol having a number of repeating units of from 3 to 50 and that is a constituent component of the polyester resin (A), has a structure represented by Formula (1) or Formula (2) below:
HO-((CH₂)ₐO)_{b}-H (1)
HO-(CH₂CH((CH₂)_{c}CH₃)O)_{d}-H (2)
wherein, in Formula (1) and Formula (2), a represents a number from 2 to 4; c represents a number from 0 to 1, and each of b and d represents a number from 3 to 50.

3. The polyester-based resin composition according to claim 1 or 2, wherein a content of the polyalkylene glycol derived from the compound that has, as a frame, a polyalkylene glycol having a number of repeating units of from 3 to 50 and that is a constituent component of the polyester resin (A), is from 0.1 to 35% by mass.

4. The polyester-based resin composition according to any one of claims 1 to 3, wherein the polyester resin (A) has a number average molecular weight of from 5,000 to 35,000.

5. The polyester-based resin composition according to any one of claims 1 to 4, wherein the surfactant (B) has a structure represented by Formula (3) or Formula (4) below:
RO-((CH₂)ₑO)_{f}-H (3)
RO-(CH₂CH((CH₂)_{g}CH₃)O)ₕ-H (4)
wherein, in Formula (3) and Formula (4), each R represents an alkyl group, an alkenyl group, a cycloalkyl group, a cycloalkenyl group, a cyclic ether group, or an aryl group; e represents a number from 2 to 4; g represents a number from 0 to 1; and each of f and h represents a number of 2 or more.

6. The polyester-based resin composition according to any one of claims 1 to 5, wherein a content of the surfactant (B) is from 0.1 to 20% by mass.

7. The polyester-based resin composition according to any one of claims 1 to 6, wherein the terpene-based resin (C) is an aromatic-modified terpene resin, a terpene phenol resin, or a hydrogenated product thereof.

8. The polyester-based resin composition according to any one of claims 1 to 7, wherein the terpene-based resin (C) has a softening point of from 80 to 160°C.

9. An adhesive composition obtained by dissolving, in an organic solvent, the polyester-based resin composition according to any one of claims 1 to 8.
